# EUROPÄISCHE PATENTSCHRIFT

(11) **EP 1 634 240 B1**
(45) Veröffentlichungstag und Bekanntmachung des Hinweises auf die Patenterteilung: **27.02.2008**
(21) Anmeldenummer: 04739805.2
(22) Anmeldetag: 11.06.2004
(51) Int. Cl.: G06T 5/00, G06T 7/00

(54) **VERFAHREN ZUR KORREKTUR VON DURCH DEFEKTE IN EINER RÖNTGENSPEICHERLEUCHTSTOFFSCHICHT HERVORGERUFENEN BILDARTEFAKTEN UND RÖNTGENVORRICHTUNG**
METHOD FOR CORRECTING IMAGE ARTEFACTS CAUSED BY DEFECTS IN A FLUORESCENT X-RAY STORAGE LAYER, AND X-RAY DEVICE
PROCEDE DE CORRECTION D'ARTEFACTS D'IMAGE DUS A DES DEFAUTS D'UNE COUCHE FLUORESCENTE DE STOCKAGE DE RAYONS X ET DISPOSITIF A RAYONS X

(30) Priorität: 16.06.2003 DE 10327039
(43) Veröffentlichungstag der Anmeldung: 15.03.2006
(73) Patentinhaber: SIEMENS AKTIENGESELLSCHAFT, 80333 München (DE)
(72) Erfinder: SCHULZ, Reiner, Franz, 91077 Dormitz (DE); FUCHS, Manfred, 90461 Nürnberg (DE)
(86) Internationale Anmeldenummer: PCT/EP2004/006313
(87) Internationale Veröffentlichungsnummer: WO 2004/114212

(56) Entgegenhaltungen:
- EP-A- 0 998 138
- EP-A- 1 148 442
- DE-A- 19 945 018
- US-A- 5 854 655
- US-A1- 2001 031 098
- US-A1- 2003 039 402
- US-A1- 2003 058 998
- US-A1- 2004 061 785
- US-B1- 6 724 945

## Beschreibung

Die Erfindung betrifft ein Verfahren zur Korrektur von durch Defekte in einer Röntgenspeicherleuchtstoffschicht hervorgerufenen Artefakten sowie eine Röntgenvorrichtung.

Die U.S. Patentschrift 5,854,655 sowie die Europäischen Patentanmeldungen EP 1 148 442 A2 und EP 0 998 138 A2 beschreiben die Detektion von Artefakten in den aufgenommenen und ausgelesenen Bildsensordaten und die Korrektur dieser Artefakte durch direkte Interpolation der Sensordaten.

Aus Schulz R. F., Fortschr Röntgenstr 2001; 173: 1137-1146 ist ein Verfahren zur Herstellung eines Röntgenbilds unter Verwendung einer Röntgenspeicherleuchtstoffplatte bekannt. Ein solches Verfahren wird auch als Radiografie, insbesondere "Computed Radiography", bezeichnet. Dabei trifft Röntgenstrahlung nach Durchtritt beispielsweise durch einen Patienten auf eine Röntgenspeicherleuchtstoffschicht. Die Röntgenstrahlung wird in der Röntgenspeicherleuchtstoffschicht absorbiert. Dabei werden Elektronen in Leuchtstoffkristallen in einen angeregten metastabilen Zustand überführt. Die Verteilung dieser angeregten Elektronen in der Fläche entspricht der Verteilung der absorbierten Röntgenenergie. Mittels Fotostimulation werden die in metastabilen Zuständen befindlichen Elektronen nochmals angeregt und kehren infolgedessen in den Grundzustand zurück. Dabei wird Licht emittiert. Das emittierte Licht ist ein Maß für die absorbierte Röntgenenergie. Es wird mittels einer Ausleseeinheit erfasst. Anschließend wird mit den erfassten Daten mittels eines Computers das Röntgenbild rekonstruiert.

Im vorgenannten Dokument sind ferner Festkörperdetektoren beschrieben, bei denen eine Szintillatorschicht auf eine aus einer Vielzahl von Fotodioden gebildete Matrix unmittelbar aufgebracht sind. Außerdem sind Verfahren zur Korrektur damit hergestellter Bilder beschrieben. Der bekannte Festkörperdetektor eignet sich ausschließlich zur sofortigen Messung einer einfallenden Röntgenintensitätsverteilung. Der Festkörperdetektor ist üblicherweise Bestandteil der Röntgenvorrichtung. Er ist kabelgebunden, relativ groß und schwer und deshalb nicht so flexibel einsetzbar wie eine in einer Kassette aufgenommenen Röntgenspeicherbildplatte.

Die Empfindlichkeit einer Röntgenspeicherleuchtstoffschicht ist idealerweise über die gesamte Einfallsfläche konstant. Wird die Einfallsfläche an allen Punkten mit einer Röntgenstrahlung derselben Intensität bestrahlt, so ergibt sich ein über die gesamte Fläche homogenes Röntgenintensitätsverteilungsbild. Falls allerdings, beispielsweise herstellungsbedingt, die Röntgenspeicherleuchtstoffschicht Defekte aufweist, so ergibt sich bei Bestrahlung sämtlicher Flächenpunkte mit einer identischen Röntgenidentität ein nichthomogenes Röntgenintensitätsverteilungsbild. Solche Defekte treten insbesondere bei Röntgenspeicherleuchtstoffschichten auf, die durch Aufdampfen von Szintillationsmaterial auf ein Substrat hergestellt werden. Sie werden in Röntgenintensitätsverteilungsbild als helle oder dunkle Punkte - so genannte Bildartefakte - abgebildet. Obgleich Bildartefakte den Informationsgehalt eines Röntgenbilds nicht oder nicht wesentlich vermindern, werden Bildplatten mit Defekten behafteten Röntgenspeicherleuchtstoffschichten nach dem Stand der Technik ausgesondert und verworfen. Das ist kostenaufwändig.

Aufgabe der Erfindung ist es, die Nachteile nach dem Stand der Technik zu beseitigen. Es sollen insbesondere ein Verfahren und eine Röntgenvorrichtung angegeben werden, mit denen auf möglichst einfache und kostengünstige Weise durch Defekte in einer Röntgenspeicherleuchtstoffschicht hervorgerufene Bildartefakte korrigiert werden können.

Diese Aufgabe wird durch die Merkmale der Ansprüche 1 und 12 gelöst. zweckmäßige Ausgestaltungen ergeben sich aus den Merkmalen der Ansprüche 2 bis 11 und 13 bis 23.

Nach Maßgabe der Erfindung ist ein Verfahren zur Korrektur von durch Defekte einer Röntgenspeicherleuchtstoffschicht hervorgerufenen Bildartefakten mit folgenden Schritten vorgesehen:
Bestrahlen einer Einfallsfläche der Röntgenspeicherleuchtstoffschicht mit einer vorgegebenen homogenen Röntgenintensität,
Sequenzielles Bestrahlen der Einfallsfläche mit einer vorgegebenen homogenen Lichtintensität,
Messen einer Intensität von emittiertem Licht für jedes Pixel EB_{i,j} einer die Einfallsfläche beschreibenden Matrix und Ermittlung der einem Defekt entsprechenden Defektpixel DB_{i,j},
Korrektur der den Defektpixeln EB_{i,j} entsprechenden Pixel RB_{i,j} eines Rohbilds RB mittels Interpolation.

Das vorgeschlagene Verfahren lässt sich einfach und kostengünstig durchführen. Es sind insbesondere bei der Herstellung der Röntgenspeicherleuchtstoffschicht keine weiteren zeit- und kostenaufwändigen Schritte erforderlich. Das vorgeschlagene Verfahren kann rechnergestützt durchgeführt werden. Dazu können z. B. Defektlisten erstellt werden, in denen die Defektpixel mit ihren Koordinaten gespeichert sind. Beim "sequenziellen Bestrahlen" werden vorgegebene Flächenabschnitte, z. B. Punkte, Zeilen oder dgl., nacheinander z. B. mit einem Laser bestrahlt.

Unter "Interpolation" wird ein herkömmliches rechnerisches Verfahren verstanden, mit dem das oder die Defektpixel DB_{i,j} in ihrer Helligkeit bzw. ihrem Grauwert an die Helligkeit bzw. Grauwerte der benachbarten Pixel angeglichen werden. Dazu kann das Defektpixel im rekonstruierten Röntgenbild beispielsweise mit einer aus den benachbarten Pixeln ermittelten mittleren Helligkeit bzw. einem mittleren Grauwert wiedergegeben werden. Nach der mittels Interpolation vorgenommenen Korrektur ist das Defektpixel DB_{i,j} im rekonstruierten Röntgenbild nicht mehr erkennbar. Auch mit geringfügigen Defekten behaftete Röntgenspeicherleuchtstoffschichten können unter Verwendung des erfindungsgemäßen Verfahrens zur Herstellung qualitativ hochwertiger Röntgenbilder verwendet werden.

Nach einer vorteilhaften Ausgestaltung wird ein die Defektpixel DB_{i,j} aufweisendes Defektverteilungsbild hergestellt. Derartige Defektverteilungsbilder liegen im selben Datenformat wie die gemessenen Rohbilder vor. Das erleichtert die Korrektur der Rohbilder.

Weiterhin hat es sich als zweckmäßig erwiesen, dass der Röntgenspeicherleuchtstoffschicht eine automatisch erkennbare Markierung zugeordnet und im Defektverteilungsbild der Ort jedes des Defektpixels DB_{i,j} in Bezug zur Markierung eindeutig festgelegt ist.

Unter einer "Markierung" im Sinne der vorliegenden Erfindung wird jegliche, insbesondere mittels eines Computers automatisch erkennbare Markierung verstanden. Die Markierung dient einer exakten Korrelierung des für die jeweilige Röntgenspeicherleuchtstoffschicht bereitgestellten Defektverteilungsbilds mit einem unter Verwendung der Röntgenspeicherleuchtstoffschicht hergestellten Rohbild.

Zur Korrelierung der Pixel RB_{i,j} und der Defektpixel DB_{i,j} können die Markierungen durch Verschiebung und/oder Rotation einer Matrix relativ zu anderen überlagert werden. Infolge der Korrelierung ist es möglich, pixelgenau jedes zu einem Defektpixel DB_{i,j} korrespondierende Pixel RB_{i,j} des Rohbilds einer Defektkorrektur mittels Interpolation zu unterziehen.

Als Markierung kann beispielsweise der Rand der Röntgenspeicherleuchtstoffschicht verwendet werden. Zweckmäßigerweise ist die Markierung Bestandteil der Röntgenspeicherleuchtstoffschicht. Sie kann durch Abdeckung vorgegebener Bereiche der Röntgenspeicherleuchtstoffschicht hergestellt werden. Es ist zweckmäßig, Markierungen in einer möglichst großen Entfernung, insbesondere am Rand oder in den Ecken der Röntgenspeicherleuchtstoffschicht anzuordnen. Die Markierungen können vorteilhafterweise in Form von Kreuzen ausgebildet sein.

Nach einer weiteren Ausgestaltung wird die Markierung mittels eines Mustererkennungs-Algorithmus automatisch erkannt. Sobald eine Markierung erkannt ist, können die Pixel des Rohbilds mit den Pixeln des Defektverteilungsbilds korreliert werden. Dazu kann eine Matrix relativ zur anderen verschoben oder rotiert werden.

Nach einer weiteren Ausgestaltung des Verfahrens wird vorgeschlagen, dass die Röntgenspeicherleuchtstoffschicht anhand der Markierung automatisch identifiziert, aus einer Bibliothek einer Vielzahl von Defektverteilungsbildern das zur identifizierten Röntgenspeicherleuchtstoffschicht korrespondierende Defektverteilungsbild ausgewählt und die Korrektur unter Verwendung des ausgewählten Defektverteilungsbilds durchgeführt wird. Das vorgeschlagene Verfahren ist besonders flexibel. Die Defektverteilungsbilder können in einer Datenbank eines Computers gespeichert werden. Gesonderte Speichereinrichtungen sind nicht unbedingt erforderlich.

In der Praxis werden eine Vielzahl von so genannten Bildplatten verwendet. Es handelt sich dabei jeweils um ein Substrat bzw. eine Platte, auf dem eine Röntgenspeicherleuchtstoffschicht abgeschieden ist. Eine solche Bildplatte ist üblicherweise in einer Kassette aufgenommen. Nach einer weiteren Ausgestaltung der Erfindung ist vorgesehen, dass das Defektverteilungsbild aus einem Speicher ausgelesen wird, der Bestandteil einer die Röntgenspeicherleuchtstoffschicht aufnehmenden Kassette ist. In diesem Fall ist der Röntgenspeicherleuchtstoffschicht sogleich der für deren Defektkorrektur erforderliche Information zugeordnet. Es kann auch sein, dass der Speicher Bestandteil des die Röntgenspeicherleuchtstoffschicht aufnehmenden Substrats ist. In diesem Fall kann es nicht zu einer Verwechslung durch Einschieben der Bildplatten in eine andere Kassette kommen.

Nach einer weiteren Ausgestaltung wird vorgeschlagen, dass das Rohbild gespeichert wird, wenn kein Defektverteilungsbild aufgefunden wird. In diesem Fall wird sichergestellt, dass das Rohbild nicht verloren geht. Das zur Defektkorrektur erforderliche Defektverteilungsbild kann ggf. auch nach der Herstellung eines Rohbilds erzeugt werden.

Nach weiterer Maßgabe der Erfindung ist eine Röntgenvorrichtung mit den Merkmalen des Anspruchs 12 vorgesehen. Wegen der vorteilhaften Ausgestaltungen der Röntgenvorrichtung wird auf die Erläuterung der vorgenannten Merkmale verwiesen, die sinngemäß auch auf die Röntgenvorrichtung Anwendung finden können.

Besonders vorteilhaft ist es, dass die Röntgenvorrichtung einen Computer umfasst und zumindest eines der folgenden Mittel als Computerprogramm ausgeführt ist:
Mittel zur Bereitstellung eines die Defektpixel DB_{i,j} der Röntgenspeicherleuchtstoffschicht wiedergebenden Datensatzes, vorzugsweise in Form eines Defektverteilungsbilds,
Mittel zur automatischen Erkennung der Markierung,
Mittel zur Korrelierung der Pixel des Defektverteilungsbilds und des Rohbilds,
Mittel zur Korrektur des Rohbilds mittels Interpolation,
Mittel zur Auswahl eines zur identifizierten Röntgenspeicherleuchtstoffschicht ermittelten Defektverteilungsbilds aus einer Bibliothek einer Vielzahl von Defektverteilungsbildern.

Die vorgeschlagene Röntgenvorrichtung lässt sich im Wesentlichen durch die Bereitstellung eines geeigneten Computerprogramms realisieren. Eine kostenaufwändige Änderung der Hardware ist dazu nicht unbedingt erforderlich.

Nachfolgend werden anhand der Zeichnungen vorteilhafte Ausgestaltungen der Erfindung näher erläutert. Es zeigen:
- Fig. 1: eine schematische Ansicht der wesentlichen Bestandteile einer herkömmlichen Radiografie-Vorrichtung,
- Fig. 2a: eine Draufsicht auf die Matrix eines Defektverteilungsbilds einer Röntgenspeicherleuchtstoffschicht,
- Fig. 2b: eine Draufsicht auf die Matrix des mit der Röntgenspeicherleuchtstoffschicht gemäß Fig. 3a aufgenommenen Rohbilds,
- Fig. 3: eine schematische Ansicht der wesentlichen Bestandteile und Schritte des Verfahrens.

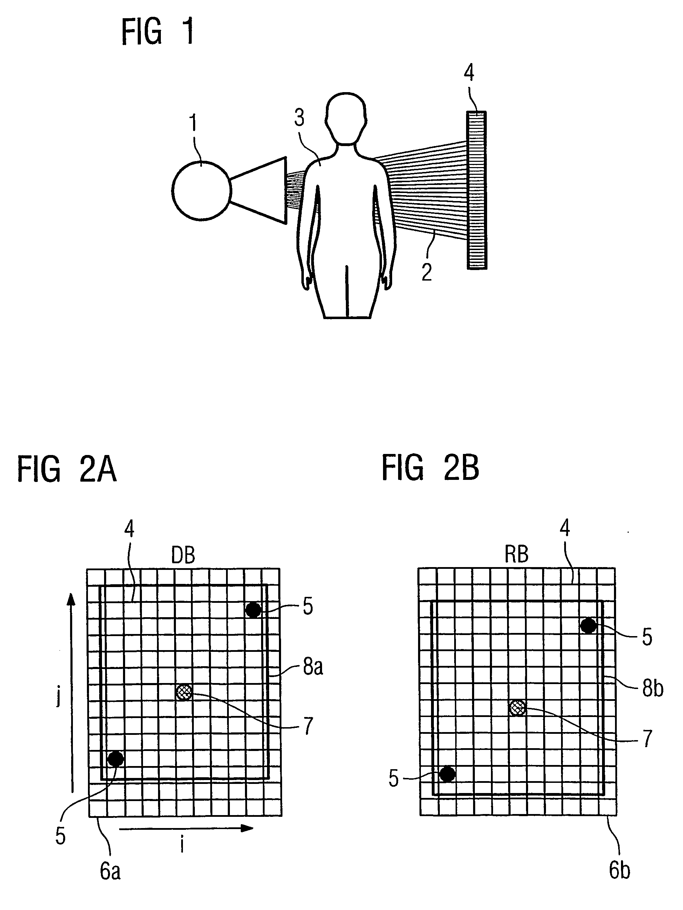

Fig. 1 zeigt in einer schematischen Ansicht die wesentlichen Bestandteile einer herkömmlichen Radiografie-Vorrichtung. Aus einer Röntgenquelle 1 austretende Röntgenstrahlen 2 durchlaufen einen Patienten 3 und werden anschließend auf einer Röntgenspeicherleuchtstoffschicht 4 absorbiert.

Fig. 2a zeigt die Pixelstruktur eines Defektverteilungsbilds DB. Mit dem Bezugszeichen 5 sind Markierungen bezeichnet. Es handelt sich dabei um vorgegebene, z. B. mit einem lichtundurchlässigen Lack, abgedeckte Bereiche der Röntgenspeicherleuchtstoffschicht 4, die als schwarze Punkte im Defektverteilungsbild DB abgebildet werden. Ein in der Röntgenspeicherleuchtstoffschicht 4 enthaltener Defekt wird als Bildartefakt 7 in eine Matrix 6a des Defektverteilungsbilds DB abgebildet. Das Bildartefakt 7 ist in seiner Lage eindeutig zu den Markierungen 5 festgelegt. Mit 8a, 8b ist jeweils der Rand der Röntgenspeicherleuchtstoffschicht 4 bezeichnet.

Bei dem in Fig. 2b gezeigten Rohbild RB ist der Rand 8b der Röntgenspeicherleuchtstoffschicht 4 gegenüber dem Rand 8a beim Empfindlichkeitsbild EB geringfügig - hier um ein Pixel - verschoben. Eine solche Verschiebung kann durch Ungenauigkeiten einer Mechanik einer Auslesevorrichtung 9 bedingt sein. Die Markierungen 5 erlauben eine Korrelierung der Matrix 6a des Defektverteilungsbilds DB und der Matrix 6b des Rohbilds RB, z. B. durch Translation oder Rotation der Matrix 6b relativ zur Matrix 6a. Nach erfolgter Korrelierung kann eine vollständige Korrektur des Bildartefakts 7 durch Interpolation erfolgen.

Zur Herstellung der Markierungen 5 hat es sich als besonders zweckmäßig erwiesen, mittels Farbe, vorzugsweise schwarzer oder reflektierender Farbe, bestimmte Bereiche der Röntgenspeicherleuchtstoffschicht 4 abzudecken. Durch eine solche Abdeckung wird die Emission von Licht verhindert. Es kann von einer Auslesevorrichtung nicht mehr erfasst werden und erscheint als schwarzer Punkt im Defektverteilungs- DB und Rohbild RB. Die Markierung 5 kann aber auch durch das Vorsehen Röntgen-absorbierender Materialien auf einer der Röntgenquelle 1 zugewandten Einstrahlfläche der Röntgenspeicherleuchtstoffschicht 4 gebildet werden. Die Markierung 5 ist insbesondere so ausgebildet, dass sie durch einen Mustererkennungs-Algorithmus gut erkannt werden kann. Beispielsweise haben sich Kreuze als geeignet erwiesen.

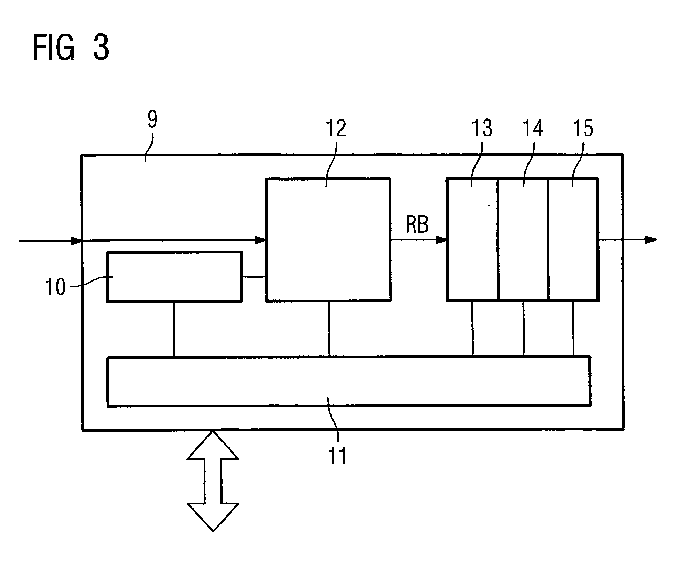

Fig. 3 zeigt die wichtigsten Bestandteile und Schritte des erfindungsgemäßen Verfahrens. Zunächst wird eine die Röntgenspeicherleuchtstoffschicht 4 aufnehmende Bildplatte, die ggf. in einer Kassette aufgenommen ist, in eine Auslesevorrichtung 9 eingesetzt. Mittels einer Identifizierungseinrichtung 10 wird anhand der auf der Bildplatte vorgesehenen Markierung 5 die Bildplatte identifiziert. Einer Datenverarbeitungseinrichtung 11 werden die entsprechenden Identifizierungsdaten übergeben. Anschließend wird mittels einer Ausleseeinheit 12 eine Szintillationslichtverteilung aus der Röntgenspeicherleuchtstoffschicht 4 ausgelesen. Die Szintillationslichtverteilung wird in ein digitales Rohbild RB umgewandelt. Mittels eines ersten Programms 13 wird anschließend eine Verschiebung und/oder Rotation der Matrix 6b des Rohbilds RB gegenüber der Matrix 6a des dazu korrespondierenden Defektverteilungsbilds DB durchgeführt, so dass die Markierungen 5 in Deckung gebracht werden. Mittels eines zweiten Programms 14 wird dann die Defektkorrektur durchgeführt. Das defektkorrigierte Bild kann anschließend mittels eines dritten Programms 15 einer weiteren Bildverarbeitung unterzogen werden. Dabei können verschiedene Verfahren, z. B. eine weitere Kalibrierung von Auswerteeinheit-Artefakten, eine Kantenbetonung und dgl. erfolgen.

## Patentansprüche

1. Verfahren zur Korrektur von durch Defekte in einer Röntgenspeicherleuchtstoffschicht (4) hervorgerufenen Bildartefakten (7) mit folgenden Schritten:
Bestrahlen einer Einfallsfläche der Röntgenspeicherleuchtstoffschicht (4) mit einer vorgegebenen homogenen Röntgenintensität, **gekennzeichnet durch**:
Sequenzielles Bestrahlen der Einfallsfläche mit einer vorgegebenen homogenen Lichtintensität,
Messen einer Intensität von emittiertem Licht für jedes Pixel einer die Einfallsfläche beschreibenden Matrix (6a, 6b) und Ermittlung der einem Defekt entsprechenden Defektpixel DB_{i,j} und
Korrektur der den Defektpixeln DB_{i,j} entsprechenden Pixel RB_{i,j} eines Rohbilds RB mittels Interpolation.

2. Verfahren nach Anspruch 1, wobei ein die Defektpixel DB_{i,j} aufweisendes Defektverteilungsbild DB hergestellt wird.

3. Verfahren nach Anspruch 1 oder 2, wobei der Röntgenspeicherleuchtstoffschicht (4) eine automatisch erkennbare Markierung (5) zugeordnet und im Defektverteilungsbild DB der Ort jedes Defektpixels DB_{i,j} in Bezug zur Markierung (5) eindeutig festgelegt wird.

4. Verfahren nach einem der vorhergehenden Ansprüche, wobei zur Korrelierung der Pixel RB_{i,j} und der Defektpixel DB_{i,j} die Markierungen (5) durch Verschiebung und/oder Rotation einer Matrix (6a, 6b) relativ zur anderen überlagert werden.

5. Verfahren nach einem der vorgehenden Ansprüche, wobei als Markierung (5) der Rand (8a, 8b) der Röntgenspeicherleuchtstoffschicht (4) verwendet wird.

6. Verfahren nach einem der vorhergehenden Ansprüche, wobei die Markierung (5) Bestandteil der Röntgenspeicherleuchtstoffschicht (4) ist.

7. Verfahren nach einem der vorhergehenden Ansprüche, wobei die Markierung (5) durch Abdeckung vorgegebener Bereiche der Röntgenspeicherleuchtstoffschicht (4) hergestellt wird.

8. Verfahren nach einem der vorhergehenden Ansprüche, wobei die Markierung (5) mittels eines Mustererkennungs-Algorithmus (10) automatisch erkannt wird.

9. Verfahren nach einem der vorhergehenden Ansprüche, wobei eine die Röntgenspeicherleuchtstoffschicht (4) anhand einer Markierung (5) automatisch identifiziert, aus einer Bibliothek einer Vielzahl von Defektverteilungsbildern DB das zur identifizierten Röntgenspeicherleuchtstoffschicht (4) ermittelte Defektverteilungsbild DB ausgewählt und die Interpolation unter Verwendung des ausgewählten Defektverteilungsbilds DB durchgeführt wird.

10. Verfahren nach einem der vorhergehenden Ansprüche, wobei das Defektverteilungsbild DB aus einem Speicher ausgelesen wird, der Bestandteil einer die Röntgenspeicherleuchtstoffschicht (4) aufnehmenden Kassette ist.

11. Verfahren nach einem der vorhergehenden Ansprüche, wobei das Rohbild RB gespeichert wird, wenn kein Defektverteilungsbild DB aufgefunden wird.

12. Röntgenvorrichtung mit
einem Mittel (1) zum Bestrahlen einer Einfallsfläche der Röntgenspeicherleuchtstoffschicht (4) mit einer vorgegebenen homogenen Röntgenintensität, **gekennzeichnet durch**:
ein Mittel (1) zum sequenziellen Bestrahlen der Einfallsfläche mit einer vorgegebenen homogenen Lichtintensität,
ein Mittel (9) zum Messen einer Intensität von emittiertem Szintillationslicht für jedes Pixel RB_{i,j} einer die Einfallsfläche beschreibenden Matrix (6a, 6b) und einem Mittel (10) zur Ermittlung der einem Defekt entsprechenden Defektpixel DB_{i,j},
ein Mittel zur Korrektur der den Defektpixeln DB_{i,j} entsprechenden Pixel RBi,j eines Rohbilds RB mittels Interpolation.

13. Röntgenvorrichtung nach Anspruch 12, wobei die Defektpixel DB_{i,j} in Form eines Defektverteilungsbilds DB gespeichert sind.

14. Röntgenvorrichtung nach Anspruch 12 oder 13, wobei der Röntgenspeicherleuchtstoffschicht (4) eine automatisch erkennbare Markierung (5) zugeordnet und im Defektverteilungsbild DB der Ort jedes Defektpixels DB_{i,j} in Bezug zur Markierung (5) eindeutig festgelegt ist.

15. Röntgenvorrichtung nach einem der Ansprüche 12 bis 14, wobei zur Korrelierung der Pixel RB_{i,j} und der Defektpixel DB_{i,j} ein Mittel zur Verschiebung und/oder Rotation einer Matrix (6a, 6b) relativ zur anderen und zur Überlagerung der Markierungen (5) vorgesehen ist.

16. Röntgenvorrichtung nach einem der Ansprüche 12 bis 15, wobei die Markierung (5) durch den Rand (8a, 8b) der Röntgenspeicherleuchtstoffschicht (4) gebildet ist.

17. Röntgenvorrichtung nach einem der Ansprüche 12 bis 16, wobei die Markierung (5) Bestandteil der Röntgenspeicherleuchtstoffschicht (4) ist.

18. Röntgenvorrichtung nach einem der Ansprüche 12 bis 17, wobei die Markierung (5) durch Abdeckung vorgegebener Bereiche der Röntgenspeicherleuchtstoffschicht (4) gebildet ist.

19. Röntgenvorrichtung nach einem der Ansprüche 12 bis 18, wobei zur automatischen Erkennung der Markierung (5) ein Mustererkennungs-Algorithmus vorgesehen ist.

20. Röntgenvorrichtung nach einem der Ansprüche 12 bis 19, wobei ein Mittel zur automatischen Identifizierung der Röntgenspeicherleuchtstoffschicht (4) anhand einer Markierung (5), ein Mittel zur Auswahl des zur identifizierten Röntgenspeicherleuchtstoffschicht (4) ermittelten Defektverteilungsbilds DB aus einer Bibliothek einer Vielzahl von Defektverteilungsbildern DB und ein Mittel zur Interpolation unter Verwendung des ausgewählten Defektverteilungsbilds DB vorgesehen sind.

21. Röntgenvorrichtung nach einem der Ansprüche 12 bis 20, wobei das Defektverteilungsbild DB in einem Speicher gespeichert ist, der Bestandteil einer die Röntgenspeicherleuchtstoffschicht (4) aufnehmenden Kassette ist.

22. Röntgenvorrichtung nach einem der Ansprüche 12 bis 21, wobei ein Zwischenspeicher zum Speichern des Rohbilds RB vorgesehen ist.

23. Röntgenvorrichtung nach einem der Ansprüche 12 bis 22, wobei die Röntgenvorrichtung einen Computer umfasst und zumindest eines der folgenden Mittel als Computerprogramm ausgeführt ist:
Mittel zur Bereitstellung eines die Defektpixel DB_{i,j} der Röntgenspeicherleuchtstoffschicht (4) wiedergebenden Datensatzes, vorzugsweise in Form eines Defektverteilungsbilds,
Mittel zur automatischen Erkennung der Markierung (5),
Mittel zur Korrelierung der Pixel des Defektverteilungsbilds DB und des Rohbilds RB,
Mittel zur Korrektur des Rohbilds RB mittels Interpolation,
Mittel zur Auswahl eines zur identifizierten Röntgenspeicherleuchtstoffschicht (4) ermittelten Defektverteilungsbilds aus einer Bibliothek einer Vielzahl von Defektverteilungsbildern.

## Claims

1. Method for correcting image artefacts (7) caused by defects in a fluorescent x-ray storage layer (4) with the following steps:
a surface of incidence of the fluorescent x-ray storage layer (4) is irradiated with a predetermined homogenous x-ray intensity, **characterised by**:
sequential irradiation of the surface of incidence with a predetermined homogenous light intensity,
measurement of the intensity of emitted light for each pixel of a matrix (6a, 6b) describing the surface of incidence and determination of the defect pixels DB_{i,j} corresponding to a defect and
correction of the pixels RB_{i,j} corresponding to the defect pixels DB_{i,j} and pertaining to a raw image RB by means of interpolation.

2. Method according to claim 1, wherein a defect distribution image DB having the defect pixels DB_{i,j} is produced.

3. Method according to claim 1 or 2, wherein the fluorescent x-ray storage layer (4) is assigned an automatically identifiable marking (5) and the location of each defect pixel DB_{i,j} is determined uniquely in the defect distribution image (DB) in relation to the marking (5).

4. Method according to one of the preceding claims, wherein, to correlate the pixels RB_{i,j} and the defect pixels DB_{i,j}, the markings (5) are superimposed by displacing and/or rotating one matrix (6a, 6b) in relation to the other.

5. Method according to one of the preceding claims, wherein the edge (8a, 8b) of the fluorescent x-ray storage layer (4) is used as the marking (5).

6. Method according to one of the preceding claims, wherein the marking (5) is a component of the fluorescent x-ray storage layer (4).

7. Method according to one of the preceding claims, wherein the marking (5) is produced by covering predetermined regions of the fluorescent x-ray storage layer (4).

8. Method according to one of the preceding claims, wherein the marking (5) is identified automatically by means of a pattern-recognition algorithm (10).

9. Method according to one of the preceding claims, wherein the fluorescent x-ray storage layer (4) is identified automatically based on a marking (5), the defect distribution image DB determined for the identified fluorescent x-ray storage layer (4) is selected from a library containing a plurality of defect distribution images DB and the interpolation is carried out using the selected defect distribution image DB.

10. Method according to one of the preceding claims, wherein the defect distribution image DB is read out from a memory, which is a component of a cassette holding the fluorescent x-ray storage layer (4).

11. Method according to one of the preceding claims, wherein the raw image RB is stored, if no defect distribution image DB is found.

12. X-ray device with
a means (1) for irradiating a surface of incidence of the fluorescent x-ray storage layer (4) with a predetermined homogenous x-ray intensity, **characterised by**:
a means (1) for the sequential irradiation of the surface of incidence with a predetermined homogenous light intensity,
a means (9) for measuring the intensity of emitted scintillation light for each pixel RB_{i,j} of a matrix (6a, 6b) describing the surface of incidence and a means (10) for determining the defect pixels DB_{i,j} corresponding to a defect,
a means for correcting the pixels RB_{i,j} corresponding to the defect pixels DB_{i,j} and pertaining to a raw image RB by means of interpolation.

13. X-ray device according to claim 12, wherein the defect pixels DB_{i,j} are stored in the form of a defect distribution image DB.

14. X-ray device according to claim 12 or 13, wherein the fluorescent x-ray storage layer (4) is assigned an automatically identifiable marking (5)and the location of each defect pixel DB_{i,j} is determined uniquely in the defect distribution image (DB) in relation to the marking (5).

15. X-ray device according to one of claims 12 to 14, wherein, to correlate the pixels RB_{i,j} and the defect pixels DB_{i,j}, a means is provided to displace and/or rotate one matrix (6a, 6b) in relation to the other and to superimpose the markings (5).

16. X-ray device according to one of claims 12 to 15, wherein the marking (5) is formed by the edge (8a, 8b) of the fluorescent x-ray storage layer (4).

17. X-ray device according to one of claims 12 to 16, wherein the marking (5) is a component of the fluorescent x-ray storage layer (4).

18. X-ray device according to one of claims 12 to 17, wherein the marking (5)is formed by covering predetermined regions of the fluorescent x-ray storage layer (4).

19. X-ray device according to one of claims 12 to 18, wherein a pattern-recognition algorithm (10) is provided for automatic identification of the marking (5).

20. X-ray device according to one of claims 12 to 19, wherein a means is provided for automatic identification of the fluorescent x-ray storage layer (4) based on a marking (5), a means is provided for selection of the defect distribution image DB determined for the identified fluorescent x-ray storage layer (4) from a library containing a plurality of defect distribution images DB and a means is provided for interpolation using the selected defect distribution image DB.

21. X-ray device according to one of claims 12 to 20, wherein the defect distribution image DB is stored in a memory, which is a component of a cassette holding the fluorescent x-ray storage layer (4).

22. X-ray device according to one of claims 12 to 21, wherein a buffer is provided to store the raw image RB.

23. X-ray device according to one of claims 12 to 22, wherein the x-ray device comprises a computer and at least one of the following means is executed as a computer program:
means for providing a data record reproducing the defect pixels DB_{i,j} of the fluorescent x-ray storage layer (4), preferably in the form of a defect distribution image,
means for automatic identification of the marking (5),
means for correlating the pixels of the defect distribution image DB and the raw image RB,
means for correcting the raw image RB by means of interpolation,
means for selecting a defect distribution image determined for the identified fluorescent x-ray storage layer (4) from a library containing a plurality of defect distribution images.

## Revendications

1. Procédé pour la correction d'artefacts d'image (7) dus à des défauts dans une couche luminescente de stockage de rayons X (4), ayant les étapes suivantes :
- irradiation d'une surface d'incidence de la couche luminescente de stockage de rayons X (4) avec une intensité de rayons X homogène prescrite,
**caractérisé par** :
- l'irradiation séquentielle de la surface d'incidence avec une intensité lumineuse homogène prescrite,
- la mesure d'une intensité de lumière émise pour chaque pixel d'une matrice (6a, 6b) décrivant la surface d'incidence et la détermination des pixels défectueux DB_{i,j} correspondant à un défaut, et
- la correction des pixels RB_{i,j}, correspondants aux pixels défectueux DB_{i,j}, d'une image brute RB au moyen d'une interpolation.

2. Procédé selon la revendication 1, dans lequel on élabore une image de répartition de défauts DB comportant les pixels défectueux DB_{i,j}.

3. Procédé selon la revendication 1 ou 2, dans lequel on associe à la couche luminescente de stockage de rayons X (4) un repère automatiquement détectable (5) et, dans l'image de répartition de défauts DB, on spécifie sans équivoque l'emplacement de chaque pixel défectueux DB_{i,j} par rapport au repère (5).

4. Procédé selon l'une des revendications précédentes, dans lequel, pour la corrélation des pixels RB_{i,j} et des pixels défectueux DB_{i,j}, on superpose les repères (5) par translation et/ou rotation d'une matrice (6a, 6b) par rapport à l'autre.

5. Procédé selon l'une des revendications précédentes, dans lequel on utilise comme repère (5) le bord (8a, 8b) de la couche luminescente de stockage de rayons X (4).

6. Procédé selon l'une des revendications précédentes, dans lequel le repère (5) fait partie de la couche luminescente de stockage de rayons X (4).

7. Procédé selon l'une des revendications précédentes, dans lequel on produit le repère (5) en recouvrant des zones prédéterminées de la couche luminescente de stockage de rayons X (4).

8. Procédé selon l'une des revendications précédentes, dans lequel on détecte automatiquement le repère (5) au moyen d'un algorithme de reconnaissance de formes (10).

9. Procédé selon l'une des revendications précédentes, dans lequel on identifie automatiquement la couche luminescente de stockage de rayons X (4) à l'aide d'un repère (5), on sélectionne dans une bibliothèque contenant de nombreuses images de répartition de défauts DB l'image de répartition de défauts DB déterminée pour la couche luminescente de stockage de rayons X (4) identifiée et on effectue l'interpolation en utilisant l'image de répartition de défauts DB sélectionnée.

10. Procédé selon l'une des revendications précédentes, dans lequel on lit l'image de répartition de défauts DB dans une mémoire qui fait partie d'une cassette logeant la couche luminescente de stockage de rayons X (4).

11. Procédé selon l'une des revendications précédentes, dans lequel on mémorise l'image brute RB lorsque l'on n'a pas trouvé d'image de répartition de défauts DB.

12. Dispositif à rayons X, comportant:
- un moyen (1) pour irradier une surface d'incidence de la couche luminescente de stockage de rayons X (4) avec une intensité de rayons X homogène prescrite,
**caractérisé par** :
- un moyen (1) pour irradier séquentiellement la surface d'incidence avec une intensité lumineuse homogène prescrite,
- un moyen (9) pour mesurer une intensité de lumière de scintillation émise pour chaque pixel RB_{i,j} d'une matrice (6a, 6b) décrivant la surface d'incidence et un moyen (10) pour déterminer les pixels défectueux DB_{i,j} correspondant à un défaut, et
- un moyen pour corriger les pixels RB_{i,j}, correspondants aux pixels défectueux DB_{i,j}, d'une image brute RB au moyen d'une interpolation.

13. Dispositif à rayons X selon la revendication 12, dans lequel les pixels défectueux DB_{i,j} sont mémorisés sous la forme d'une image de répartition de défauts DB.

14. Dispositif à rayons X selon la revendication 12 ou 13, dans lequel un repère automatiquement détectable (5) est associé à la couche luminescente de stockage de rayons X (4) et, dans l'image de répartition de défauts DB, l'emplacement de chaque pixel défectueux DB_{i,j} par rapport au repère (5) est spécifié sans équivoque.

15. Dispositif à rayons X selon l'une des revendications 12 à 14, dans lequel, pour la corrélation des pixels RB_{i,j} et des pixels défectueux DB_{i,j}, un moyen est prévu pour la translation et/ou la rotation d'une matrice (6a, 6b) par rapport à l'autre et pour la superposition des repères (5).

16. Dispositif à rayons X selon l'une des revendications 12 à 15, dans lequel le repère (5) est formé par le bord (8a, 8b) de la couche luminescente de stockage de rayons X (4).

17. Dispositif à rayons X selon l'une des revendications 12 à 16, dans lequel le repère (5) fait partie de la couche luminescente de stockage de rayons X (4).

18. Dispositif à rayons X selon l'une des revendications 12 à 17, dans lequel le repère (5) est formé en recouvrant des zones prédéterminées de la couche luminescente de stockage de rayons X (4).

19. Dispositif à rayons X selon l'une des revendications 12 à 18, dans lequel un algorithme de reconnaissance de formes est prévu pour la détection automatique du repère (5).

20. Dispositif à rayons X selon l'une des revendications 12 à 19, dans lequel il est prévu un moyen pour identifier automatiquement la couche luminescente de stockage de rayons X (4) à l'aide d'un repère (5), un moyen pour sélectionner dans une bibliothèque contenant de nombreuses images de répartition de défauts DB l'image de répartition de défauts DB déterminée pour la couche luminescente de stockage de rayons X (4) identifiée et un moyen pour effectuer une interpolation en utilisant l'image de répartition de défauts DB sélectionnée.

21. Dispositif à rayons X selon l'une des revendications 12 à 20, dans lequel l'image de répartition de défauts DB est mémorisée dans une mémoire qui fait partie d'une cassette logeant la couche luminescente de stockage de rayons X (4).

22. Dispositif à rayons X selon l'une des revendications 12 à 21, dans lequel il est prévu une mémoire intermédiaire pour mémoriser l'image brute RB.

23. Dispositif à rayons X selon l'une des revendications 12 à 22, dans lequel le dispositif à rayons X comprend un ordinateur et au moins l'un des moyens suivants est réalisé sous forme de programme informatique :
- le moyen pour fournir un ensemble de données reproduisant les pixels défectueux DB_{i,j} de la couche luminescente de stockage de rayons X (4), de préférence sous la forme d'une image de répartition de défauts,
- le moyen pour détecter automatiquement le repère (5),
- le moyen pour corréler les pixels de l'image de répartition de défauts DB et de l'image brute RB,
- le moyen pour corriger l'image brute RB par le biais d'une interpolation,
- le moyen pour sélectionner dans une bibliothèque contenant de nombreuses images de répartition de défauts l'image de répartition de défauts déterminée pour la couche luminescente de stockage de rayons X (4) identifiée.
